# EUROPÄISCHE PATENTANMELDUNG

(11) **EP 4 681 937 A1**
(43) Veröffentlichungstag der Anmeldung: **21.01.2026**
(21) Anmeldenummer: 24189621.6
(22) Anmeldetag: 19.07.2024
(51) Int. Cl.: B60B 17/00

(54) **SCHALLABSORBERGLIED**

(71) Anmelder: Schrey & Veit GmbH, 55576 Sprendlingen (DE)
(72) Erfinder: Gramowski, Christoph, 55576 Sprendlingen (DE); Schaab, Karim, 55576 Sprendlingen (DE); Gerdemann, Gunnar, 55576 Sprendlingen (DE)
(74) Vertreter: Isarpatent

(57) **Zusammenfassung**

Ein Schallabsorberglied (10), welches eingerichtet ist, an einem Schienenrad eines Schienenfahrzeugs angeordnet zu werden, weist wenigstens eine Grundplatte (20) auf, die mittels zumindest eines Befestigungsmittels (30) an dem Schienenrad derart festlegbar ist, dass sie parallel zu einer Radebene des Schienenrads angeordnet ist; und wenigstens eine Absorberplatte (40), die mittels zumindest eines Verbindungsmittels (50) mit der Grundplatte (20) in axialer Richtung zumindest mittelbar verbindbar und verbunden an dieser gehalten ist, wobei sich zwischen der Grundplatte (20) und der Absorberplatte (30) wenigstens ein Dämpfungsmittel (60) flächig erstreckt. Die wenigstes eine Grundplatte (20) und/oder die wenigstens eine Absorberplatte (40) wird/werden jeweils entlang mindestens eines Zwischenraums (72, 74) in eine Mehrzahl zueinander benachbarter Grundplattensegmente (24, 26) und/oder Absorberplattensegmente (44, 46) unterteilt, und der mindestens eine Zwischenraum (72, 74) wird in radialer Richtung mit wenigstens zwei Abschnitte (72a, 72b, 74a, 74b) versehen, die unterschiedlichen Querschnitt aufweisen.

## Beschreibung

Die Erfindung betrifft ein Schallabsorberglied, welches eingerichtet ist, an einem Schienenrad eines Schienenfahrzeugs angeordnet zu werden, mit wenigstens einer Grundplatte die mittels zumindest eines Befestigungsmittels an dem Schienenrad derart festlegbar ist, dass sie parallel zu einer Radebene des Schienenrads liegt; und mit wenigstens einer Absorberplatte, die mittels zumindest eines Verbindungsmittels mit der Grundplatte in axialer Richtung zumindest mittelbar verbunden und an dieser gehalten ist, wobei sich zwischen der Grundplatte und der Absorberplatte wenigstens ein Dämpfungsmittel flächig erstreckt.

Beim Betrieb von Schienenfahrzeugen entstehen an deren Schienenrädern Laufgeräusche auf. Um die entsprechenden Lärmemissionen zu verringern, können Schallabsorberglieder eingesetzt werden, welche die betreffenden Laufgeräusche reduzieren, indem sie die Schwingungsamplituden der Schienenräder mit verschiedenen Maßnahmen dämpfen.

Aus der DE 26 52 874 C3 ist ein Schallabsorberglied zur Schalldämpfung an einem Schienenrad bekannt an einem Schienenrad mittels eines Körperschall absorbierenden Schirmes, der an mindestens einer Seite der Radscheibe unter Bildung eines Zwischenraumes mit der Radscheibe angeordnet und mit dem Schienenrad kraftschlüssig verbunden ist, wobei der Schirm aus in Umfangsrichtung nebeneinander angeordneten, akustisch voneinander getrennten Schwingungsdämpfern in Form von Hornteilen gebildet wird

Die DE 31 19 407 offenbart als Schallabsorberglied einen Körperschalldämpfer für ein Laufrad, insbesondere für ein Schienenrad, bestehend aus in Umfangsrichtung nebeneinander angeordneten Wellenleitern in Form von Hornteilen, welche an der Basisfläche mit dem Laufrad kraftschlüssig verbunden sind und zumindest teilweise mit einer Dämpfungsmasse bedeckt sind. Die Wellenleiter bilden eine Kreisringscheibe und sind derart ausgebildet, dass zumindest je eine Seite eines Wellenleiters tangential an den Innenradius der Kreisringscheibe hin verläuft. Zusätzlich oder alternativ dazu ist zumindest ein Teil der Wellenleiter in weitere hornteilförmige Segmente unterteilt.

In der EP 1 892 122 A1 ist als Schallabsorberglied ein Element zur Körperschalldämpfung bei einem Schienenfahrzeug-Rad beschrieben, bestehend aus einem flachen Schichtkörper aus mindestens zwei parallelen Absorberplatte mit dazwischen liegenden Dämpfungsschicht. Der Schichtkörper ist dabei mit einer randlichen Basis an einem Laufkranz des Rades derart befestigbar, dass er in einer quer zu einer Radachse angeordneten Radebene liegt. Die mindestens eine der Absorberplatten ist durch mindestens einen Schlitz in zungenartige Abschnitte unterteilt ist, wobei der Schlitz zumindest in einem in der Plattenfläche - insbesondere in einer Hinterbohrung - endenden Schlitz-Endbereich von einem schlitzfreien Bereich der jeweils benachbarten Absorberplatte überdeckt ist.

Bei den bekannten Schallaborberglieder erweist es sich als unvorteilhaft, dass diese durch ihre flächige Ausdehnung das Schienenrad mit einem erheblichen Zusatzgewicht beaufschlagen, das zum Verschleiß der Schienenräder und ihrer Radreifen beiträgt, zum anderen nicht zuletzt mit gebremst werden muss. Überdies ist auch die Handhabbarkeit aufgrund der Dimensionen der Absorber nicht einfach und unflexibel.

Es besteht daher die Aufgabe, Schallabsorberglieder der eingangs genannten Art zur Verfügung zu stellen, die bei reduzierten Gewicht eine einfache und flexible Handhabung und eine zuverlässige Reduktion von Lärmemissionen von Schienenrädern gestatten.

Diese Aufgabe wird gelöst durch ein Schallabsorberglied mit den Merkmalen des Anspruchs 1. Das erfindungsgemäße Schallabsorberglied zeichnet sich also insbesondere dadurch aus, dass die wenigstes eine Grundplatte und/oder die wenigstens eine Absorberplatte jeweils entlang mindestens eines Zwischenraums in eine Mehrzahl zueinander benachbarter Grundplattensegmente und/oder Absorberplattensegmente unterteilt sind, und dass der mindestens eine Zwischenraum in radialer Richtung wenigstens zwei Abschnitte aufweist, die sich voneinander unterscheiden. Eine erhöhte Flexibilität wird unter anderem dadurch erreicht, dass eine insbesondere hinsichtlich der Anzahl abgestimmte Kombination aus Grundplattensegmenten und Absorberplattensegmenten zusammen mit dem Dämpfungsglied eine Gegenkraft zu den jeweiligen RadSchwingungen erzeugt, wodurch Roll- und Quietschgeräusche, die radialen bzw. axialen Schwingungen des Schienenrads entsprechen, nachhaltig reduziert werden.

Dabei können an dem erfindungsgemäßen Schallabsorberglied auch sowohl mehrere Grundplattensegmente als auch mehrere Absorberplattensegmente vorgesehen sein, wobei deren Anzahl nicht notwendigerweise übereinstimmten muss, so dass mehrere Absorberplattensegmente einem Grundplattensegment zugeordnet sein können und umgekehrt. Die Anzahl an Grundplatten beispielsweise kann, ebenso wie diejenige der Befestigungs- und Verbindungsmittel etwa mit der Größe des Schallabsorberglieds variieren. Die Größe des Schallabsorberglieds wiederum kann vom Durchmesser des Schienenrads abhängen. Die Anzahl der Absorberplattensegmente und Verbindungsmittel kann die Wirkung in dem zu dämpfenden Frequenzbereich beeinflussen.

Vorteilhafte Ausgestaltungen des Schallabsorberglieds finden sich in den Unteransprüchen.

In einer vorteilhaften Weiterbildung des Schallabsorberglieds, kann dieses an einer Radinnenseite des Schienenrads, insbesondere im Bereich eines Radkranzes des Schienenrads angeordnet sein. Dadurch wird das Schallabsorberglied zum einen durch das Schienenrad nach außen von mechanischen Einflüssen abgeschirmt, zum anderen kann das Schallabsorberglied nur einen radial äußeren Abschnitt der Radscheibe überdecken, während ein radial innerer Bereich der Radscheibe überdeckungsfrei bleibt, so dass hier erheblich an Material und Gewicht eingespart werden kann. Das Schallabsorberglied kann aber auch an der nach außen gewandten Seite des Schienenrads angeordnet werden.

In einer anderen Weiterbildung des Schallabsorberglieds kann der mindestens eine Zwischenraum zwischen zwei benachbarten Grundplattensegmenten und/oder zwei benachbarten Absorberplattensegmenten in mindestens zwei Abschnitte mit unterschiedlichem Querschnitt unterteilt sein, so dass eine Anpassung der Grundplatte sowie der Absorberplatte mit ihren jeweiligen Segmenten an die jeweiligen Bedingungen des Schienenrads in einfacher Weise möglich ist.

Einfach zu fertigen ist hierbei in einer Weiterbildung des Schallabsorberglieds können in einem Abschnitt der mindestens zwei Abschnitte Ränder von benachbarten Grundplattensegmenten und/oder Absorberplattensegmenten, die zueinander im Wesentlichen derart parallel verlaufen, dass ein Segmentteil durch geradlinige Trennung in zwei Teile aufgeteilt wird. Hierbei kann es auch zu einem spürbaren, das Gewicht beeinflussenden Materialabtrag kommen. Der Abschnitt mit parallelen Rändern kann dabei der radinnere Abschnitt sein. Weiter ist es denkbar, dass in einem der Achse des Schienenrads zugewandten Abschnitt der Grundplattensegmente und/oder Absorberplattensegmente Verbindungsstücke vorgesehen sind, so dass die jeweiligen Segmente dann untereinander noch verbunden wären.

Bei einer anderen vorteilhaften Weiterbildung können in einem weiteren Abschnitt der mindestens zwei Abschnitte Abstände von Rändern von benachbarten Grundplattensegmenten (24, 26) und/oder Absorberplattensegmenten (44, 46) sich in radialer Richtung ändern, insbesondere mit zunehmendem Radius zunehmen, wodurch sie in Seitenansicht einen geringeren Querschnitt aufweisen und derart das Gewicht der Segmente weiter reduziert wird.

Bevorzugt können in diesem Fall die Ränder von benachbarten Grundplattensegmenten und/oder Absorberplattensegmenten im Querschnitt in etwa v-förmig verlaufen, so dass einander gegenüberliegende Schenkel disjunkter Grundplattensegmente und/oder Absorberplattensegmente die gleiche Neigung gegenüber einer zwischen ihnen gedacht verlaufenden Mittelebene haben können.

Besonders bevorzugt kann bei einer Weiterbildung des erfindungsgemäßen Schallabsorberglieds jedem Grundplattensegment genau ein Absorberplattensegment zugeordnet sein, was Fertigung und Handhabung der Grundplatte und der Absorberplatte mit ihren jeweiligen Segmenten, beispielsweise beim Zusammenbau, stark vereinfacht.

Gleichermaßen für die Handhabung von Vorteil können bei einer Weiterbildung die Grundplattensegmente der Grundplatte mit Ausnahme eines Befestigungsabschnitts einem dem zugeordneten Absorberplattensegment entsprechenden Querschnitt aufweisen. Dabei können die einzelnen Absorberplattensegmente einen ihnen zugeordneten Abschnitt eines Grundplattensegments insbesondere deckungsgleich überdecken. Es sind aber auch andere Konfigurationen denkbar, bei denen bspw. mehrere Absorberplattensegmente einen Abschnitt des Grundplattensegments überdecken. Der Befestigungsabschnitt kann ein Fortsatz jedes Grundplattensegments in radialer Richtung sein, an dem selbiges mit dem Schienenrad über das wenigstens eine Befestigungsmittel verbunden ist.

Beispielsweise kann es dort verschraubt sein. Die Ränder des Befestigungsabschnitts können die Neigung der Ränder (den Winkel) der Grundplattensegmente / Absorberplattensegmente aufnehmen und die Grundplattensegmente derart fortsetzen.

Um einfach an dem Schienenrad und aneinander festgelegt werden zu können, überlappen bei einer Weiterbildung zueinander benachbart angeordnete Grundplattensegmente und/oder Absorberplattensegmente einander jeweils nicht.

Mit einer Gewichtsersparnis ist eine andere Weiterbildung des erfindungsgemäße Schallabsorberglieds verbunden, bei der die Grundplatte und die Absorberplatte jeweils im Wesentlichen einen Sektor eines Kreisrings beschreiben können. Der Kreisring entsteht dabei durch den Umstand, dass der innere, der Achse des Schienenrads zugewandte Abschnitt der Radscheibe des Schienenrads nicht von dem Schallabsorberglied überdeckt ist, während der äußere dem Radkranz zugewandte Bereich der Radscheibe jedenfalls teilweise überdeckt ist.

Zur sicheren Festlegung von Grundplatte und Absorberplatte an dem Schienenrad bzw. an einander kann bei einer Weiterbildung jedem Grundplattensegment wenigstens ein Befestigungsmittel zugeordnet sein und jedem Absorberplattensegment mindestens ein Verbindungsmittel zugeordnet sein. Einzelnen Absorberplattensegmenten oder jedem Absorberplattensegment können mehrere, beispielsweise drei Verbindungsmittel, etwa in Form von Schrauben, zugeordnet sein.

Um die zu auftretenden Schwingungen in geeigneter Weise reduzieren zu können, kann das Dämpfungsmittel als plattenförmiges Elastomerelement ausgebildet sein. Bevorzugt kann sich dabei das Dämpfungsmittel zwischen Grundplatte und Absorberplatte radial zwischenraumfrei erstrecken. Dabei kann das Dämpfungsmittel einen Kreisringsektor bilden. Besonders bevorzugt kann das Dämpfungsmittel an seiner einen Flachseite von der Grundplatte und an seiner anderen Flachseite von der Absorberplatte im Wesentlichen überdeckt sein.

Die Aufgabe wird auch gelöst durch einen Schallabsorber mit einer Mehrzahl an einem Radreifen radial beabstandet angeordneter, insbesondere gleichmäßig beabstandet angeordneter, Schallabsorberglieder wie zuvor beschrieben.

Die obigen Ausgestaltungen und Weiterbildungen lassen sich, sofern zweckmäßig, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Die Erfindung wird nachstehend anhand von Ausführungsbeispielen in den Figuren der Zeichnung näher erläutert. In teilweise schematisierter Darstellung zeigen hierbei:
Fig. 1 eine Draufsicht auf eine Grundplatte mit Grundplattensegmenten und Dämpfungsmittel des Schallabsorberglieds nach einer Ausführungsform der Erfindung;
Fig. 2zeigt eine Seitenansicht des Schallabsorberglieds aus der Fig. 1;
Fig. 3a eine Draufsicht auf Absorberplatte mit Absorberplattensegmenten, Dämpfungsmittel und Befestigungsabschnitten der Grundplatte einer weiteren Ausführungsform des Schallabsorberglieds;
Fig. 3b eine Draufsicht auf das Schallabsorberglied aus der Fig. 3a entlang der Schnittlinie IIIb-IIIb;
Fig. 4 eine perspektivische Seitenansicht des Schallabsorberglieds aus den Fig.3a und 3b;
Fig. 5 eine ebene Seitenansicht des Details V aus der Fig. 3b.

In sämtlichen Figuren sind gleiche bzw. funktionsgleiche Elemente und Vorrichtungen - sofern nichts anderes angegeben ist - mit denselben Bezugszeichen versehen worden.

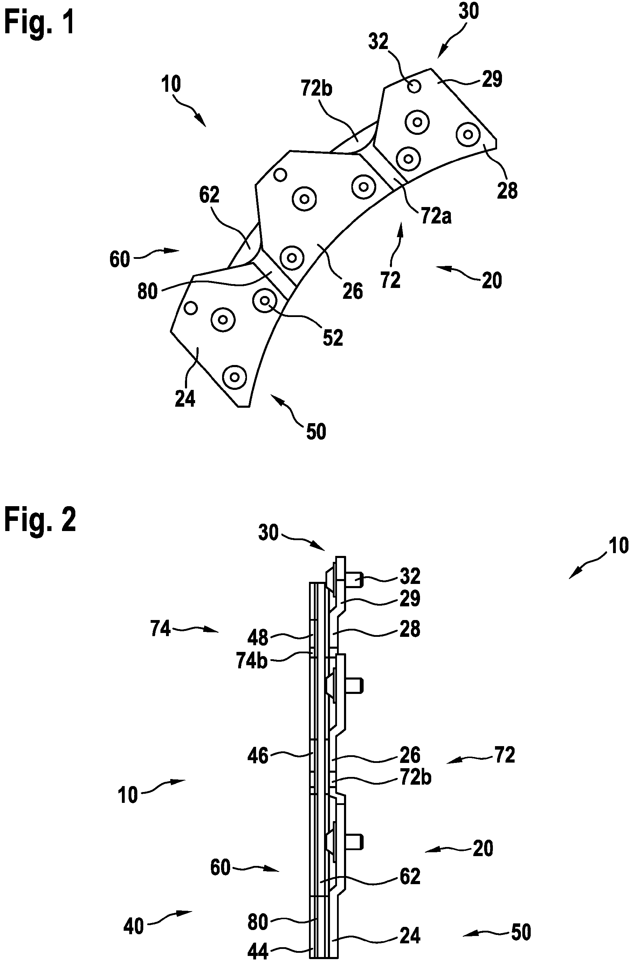

In den Zeichnungsfiguren 1 bis 5 und unter diesen insbesondere in den Fig. 1 bis 4 ist ein Schallabsorberglied 10 gezeigt Die Fig. 1 zeigt dabei eine Draufsicht auf eine Grundplatte 20 mit Grundplattensegmenten 24, 26, 28, und Dämpfungsmittel 60 des Schallabsorberglieds 10 nach einer Ausführungsform der Erfindung und die Fig. 2 eine Seitenansicht des Schallabsorberglieds 10 aus der Fig. 1;

Das Schallabsorberglied der Fig. 1 und 2 ist eingerichtet, an einem der Übersichtlichkeit nicht weiter gezeigten Schienenrad eines Schienenfahrzeugs angeordnet zu werden. Das Schallabsorberglied 10 weist eine Grundplatte 20 auf, die mittels eines Befestigungsmittels 30 an dem Schienenrad derart festgelegt ist, dass sie parallel zu einer Radebene des nicht gezeigten Schienenrads angeordnet ist. Außerdem ist das Schallabsorberglied 10 mit einer Absorberplatte 40 vorgesehen, die mittels eines Verbindungsmittels 50 mit der Grundplatte 20 in axialer Richtung mittelbar verbunden an dieser gehalten ist. Zwischen der Grundplatte 20 und der Absorberplatte 30 erstreckt sich ein Dämpfungsmittel 60, das platten bzw. schichtartig ausgebildet ist, flächig in Form eines Absorberelements 62.

Die Grundplatte 20 und die Absorberplatte 20 sind jeweils entlang eines Zwischenraums 72, 74 in drei zueinander benachbarter Grundplattensegmente 24, 26, 28 und Absorberplattensegmente 44, 46, 48 unterteilt, von denen in der Draufsicht der Fig. 1 die Grundplattensegmente 26 zu erkennen sind. Der Zwischenraum 72 zwischen den Grundplattensegmenten 24, 26, 28 ist in radialer Richtung in zwei Abschnitte 72a, 72b unterteilt, die sich voneinander unterscheiden.

Das gezeigte Schallabsorberglied 10 ist dabei insbesondere zur Anordnung an der Radinnenseite des nicht gezeigten Schienenrads vorgesehen.

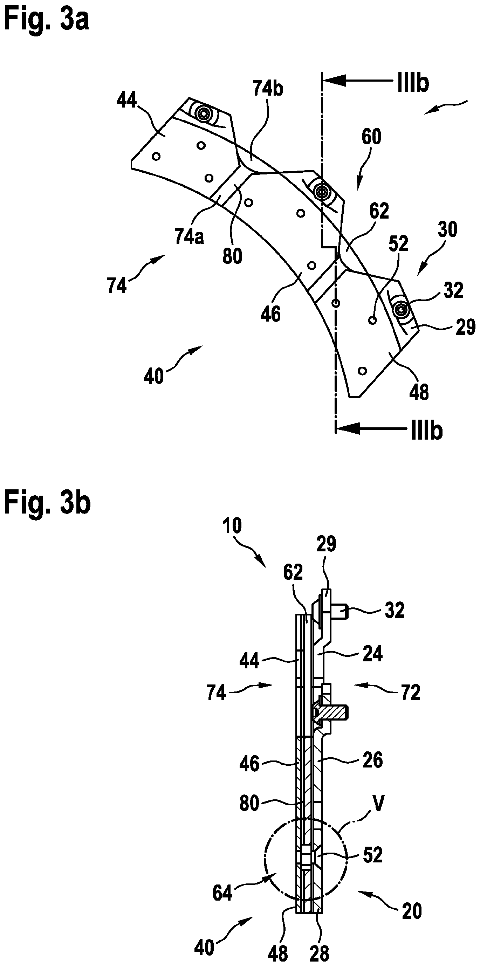

Erkennbar ist insbesondere in der Fig. 1 und der Fig. 3, dass der Zwischenraum 72, 74 zwischen zwei benachbarten Grundplattensegmenten 24, 26, 28 bzw. zwei benachbarten Absorberplattensegmenten 44, 46, 48 vorliegend in zwei Abschnitte 72a, 72b, 74a, 74b mit unterschiedlichem Querschnitt unterteilt ist.

Von den beiden jeweiligen Abschnitten 72a, 72b, 74a, 74b verlaufen in jeweils einem Abschnitt 72a, 74a Ränder von benachbarten Grundplattensegmenten 24, 26, 28 und Absorberplattensegmenten 44, 46, 48 zueinander im Wesentlichen parallel, vorliegend streng parallel, ohne dass dies einschränkend verstanden werden soll. In einem weiteren Abschnitt 72b, 74b der beiden jeweiligen Abschnitte 72a, 72b, 74a, 74b ändert sich hingegen der Abstand der Ränder von benachbarten Grundplattensegmenten 24, 26, 28 und Absorberplattensegmenten 44, 46, 28 sich in radialer Richtung und nimmt mit zunehmendem Radius zu. An den Grundplattensegmenten sind die den jeweiligen Öffnungen befindlichen Verbindungsschrauben 52 gezeigt.

Zu erkennen ist in den Fig. 1 und zwei überdies, dass die Grundplattensegment2 24, 26, 28 der Grundplatte einen Befestigungsabschnitt 29 aufweisen, der in dem radial äußeren Bereich des jeweiligen Grundplattensegments 24, 26, 28 angeordnet ist und an welchem das jeweilige Grundplattensegment mittels einer Befestigungsschraube 32 als Befestigungsmittel 30 an dem Schienenrad festgelegt ist.

Die Fig. 3a zeigt eine Draufsicht auf eine Absorberplatte mit Absorberplattensegmenten, Dämpfungsmittel und Befestigungsabschnitten der Grundplatte einer weiteren Ausführungsform des Schallabsorberglieds, während die Fig. 3b eine Draufsicht auf das Schallabsorberglied aus der Fig. 3a entlang der Schnittlinie IIIb-IIIb zeigt. Die zu den Fig. 1 und 2 getätigten Ausführungen gelten dabei grundsätzlich auch für das Schallabsorberglied 10 der Fig. 33a und 3b, wobei hier in Draufsicht die Absorberplattensegmente 44, 46, 48 der Absorberplatte 40 gezeigt sind.

Auch hier ist, wie in den Fig. 1 und 2, zu erkenne, dass einem Abschnitt 72b, 74b der beiden Abschnitte 72a, 72b, 74a, 74b der Abstand der Ränder von benachbarten Grundplattensegmenten 24, 26, 28 und Absorberplattensegmenten 44, 46, 48 sich in radialer Richtung derart ändert, dass er mit zunehmendem Radius zunimmt und insbesondere, dass die Ränder von benachbarten Grundplattensegmenten 24, 26, 28 und Absorberplattensegmenten 44, 46, 48 in etwa im Querschnitt v-förmig verlaufen. Gut zu sehen ist, dass vorliegend bei dem Schallabsorberglied jedem Grundplattensegment 24, 26, 28 genau ein Absorberplattensegment 44, 46, 48 zugeordnet ist. Außerdem ist erkennbar, dass die Grundplattensegmente 24, 26, 28 der Grundplatte 20 mit Ausnahme eines Befestigungsabschnitts 29 einem dem zugeordneten Absorberplattensegment 44, 46, 48 entsprechenden Querschnitt aufweisen. An dem Befestigungsabschnitt 29 wird die Grundplatte 20 mit ihren Segmenten an dem Schienenrad mittels eine Befestigungsmittels 30 in Form von drei Befestigungsschrauben 32 festgelegt, so dass das jeweilige Schallabsorberglied 10 sicher an dem Schienenrad gehalten ist.

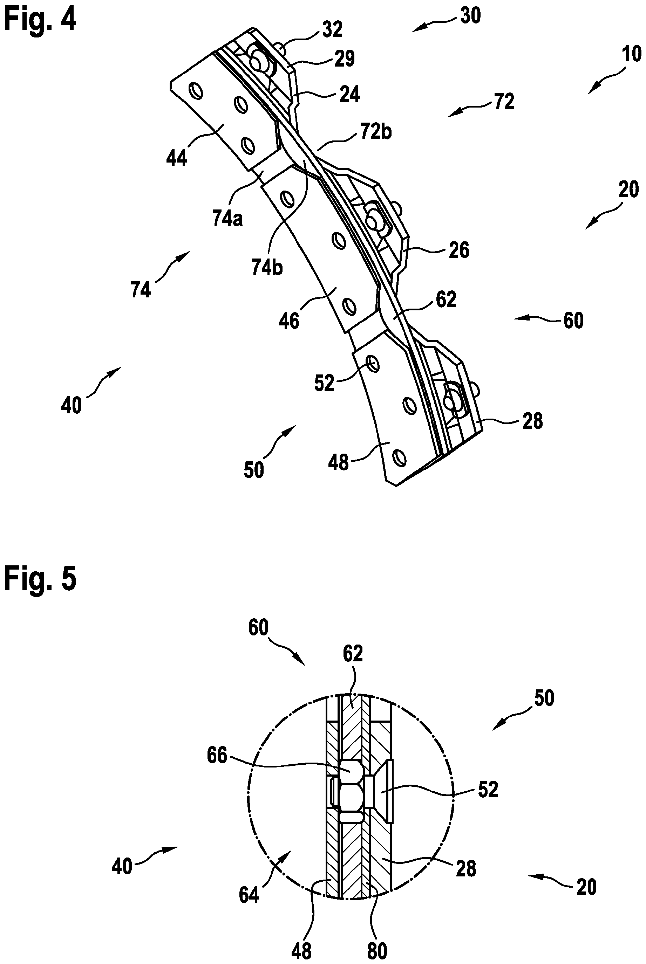

Fig. 4 zeigt eine perspektivische Seitenansicht des Schallabsorberglieds aus den Fig.3a und 3b;

Den Fig. 1, 3a und 4 ist dabei zu entnehmen, dass an dem Schallabsorberglied 10 sich das als plattenförmiges Absorberelement 62 aus Stahl ausgebildete Dämpfungsmittel 60 zwischen Grundplatte 20 und Absorberplatte 30 radial ohne Zwischenräume erstreckt und dabei geometrisch einen Kreisringsektor bildet, der in etwa einen Winkelbogen in der Größenordnung von 75 Grad beschreibt.

Besonders gut ist weiter zu erkennen, dass das Dämpfungsmittel 60 an seiner einen Flachseite von der Grundplatte 20 und an seiner anderen Flachseite von der Absorberplatte 30 im Wesentlichen überdeckt ist.

Insbesondere in der Darstellung der Fig. 4 erkennt man außerdem noch die Anordnung einer Elastomerschicht 80 jeweils zwischen dem plattenförmigen Absorberelement 62 als Dämpfungsmittel und den metallischen Grund- bzw. Absorberplatten 20, 40 mit ihren Segmenten 24, 26, 28, 44, 46, 48. Das Absorberelement 62 ist dabei zwischen zwei Elastomerschichten frei gelagert, je nach zu dämpfender Frequenz, kann sich diese Abfolge ggf. auch mehrfach wiederholen.

Fig. 5 eine ebene Seitenansicht des Details V aus der Fig. 3b, bei dem eine Verbindungsschraube 52 als Verbindungsmittel 50 eine Öffnung 64 durchgreift, welche durch fluchtende Teilöffnungen des betreffenden Grundplattensegments 28, des plattenförmigen Absorbererelements 62 aus Stahl und des betreffenden Absorberplattensegments 48 gebildet ist, ohne dass die Verbindungschraube an der Seite des Absorberplattensegments 48 übersteht. Während in der Teilöffnung des Absorbererelements aus Stahl eine Mutter 66 vorgesehen ist, weist die Teilöffnung des Absorberplattensegments 48 ein Innengewinde auf, so dass die Verbindungsschraube die drei Teile aneinander hält. Die Teilöffnung des Grundplattensegments 28 ist dabei ausgebildet den Senkkopf der Verbindungsschraube 52 derart aufzunehmen, dass es mit der dem Schienenrad zugewandten Fläche des Grundplattensegments 28 im Wesentlichen fluchtet. Die Verbindungschraube 52 kann beispielsweise eine verzinkte M8-Schraube sein.

Das erfindungsgemäße Schallabsorberglied löst dabei die eingangs erwähnte Aufgabe durch Schallabsorberglieder, die aus auf Schienenräder abstimmbaren Kombination aus Metall- und Elastomerplatten bestehen, wodurch eine Gegenkraft zur Rad-Schwingung erzeugt und die Schwingungsenergie in thermische Energie umgewandelt wird. Die Schallabsorber reduzieren Roll- und Quietschgeräusche nachhaltig und sorgen über die gesamte Schienenradlebensdauer für eine gleichbleibend hohe Schallreduktion.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 10: Schallabsorberglied
- 20: Grundplatte
- 24: Grundplattensegment
- 26: Grundplattensegment
- 28: Grundplattensegment
- 29: Befestigungsabschnitt
- 30: Befestigungsmittel
- 32: Befestigungsschraube
- 40: Absorberplatte
- 44: Absorberplattensegment
- 46: Absorberplattensegment
- 48: Absorberplattensegment
- 50: Verbindungsmittel
- 52: Verbindungsschraube
- 60: Dämpfungsmittel
- 62: Absorberelement (Stahl)
- 64: Öffnung
- 66: Mutter
- 72: Zwischenraum
- 72a, 72b: Abschnitt Zwischenraum
- 74: Zwischenraum
- 74a, 74b: Abschnitt Zwischenraum
- 80: Elastomerschicht

## Patentansprüche

1. Schallabsorberglied (10), welches eingerichtet ist, an einem Schienenrad eines Schienenfahrzeugs angeordnet zu werden,
mit wenigstens einer Grundplatte (20) die mittels zumindest eines Befestigungsmittels (30) an dem Schienenrad derart festlegbar ist, dass sie parallel zu einer Radebene des Schienenrads angeordnet ist; und
mit wenigstens einer Absorberplatte (40), die mittels zumindest eines Verbindungsmittels (50) mit der Grundplatte (20) in axialer Richtung zumindest mittelbar verbindbar und verbunden an dieser gehalten ist,
wobei sich zwischen der Grundplatte (20) und der Absorberplatte (30) wenigstens ein Dämpfungsmittel (60) flächig erstreckt,
**dadurch gekennzeichnet, dass**
die wenigstes eine Grundplatte (20) und/oder die wenigstens eine Absorberplatte (40) jeweils entlang mindestens eines Zwischenraums (72, 74) in eine Mehrzahl zueinander benachbarter Grundplattensegmente (24, 26) und/oder Absorberplattensegmente (44, 46) unterteilt sind, und dass
der mindestens eine Zwischenraum (72, 74) in radialer Richtung wenigstens zwei Abschnitte (72a, 72b, 74a, 74b) aufweist, die sich voneinander unterscheiden.

2. Schallabsorberglied nach Anspruch 1, wobei diese an einer Radinnenseite des Schienenrads, insbesondere im Bereich eines Radkranzes des Schienenrads angeordnet ist.

3. Schallabsorberglied nach Anspruch 1 oder 2, wobei der mindestens eine Zwischenraum (72, 74) zwischen zwei benachbarten Grundplattensegmenten (24, 26) und/oder zwei benachbarten Absorberplattensegmenten (44, 46) in mindestens zwei Abschnitte (72a, 72b, 74a, 74b) mit unterschiedlichem Querschnitt unterteilt ist.

4. Schallabsorberglied nach Anspruch 3, wobei in einem Abschnitt (72a, 74a) der mindestens zwei Abschnitte (72a, 72b, 74a, 74b) Ränder von benachbarten Grundplattensegmenten (24, 26) und/oder Absorberplattensegmenten (44, 46) zueinander im Wesentlichen parallel verlaufen.

5. Schallabsorberglied nach Anspruch 3 oder 4, wobei in einem weiteren Abschnitt (72b, 74b) der mindestens zwei Abschnitte (72a, 72b, 74a, 74b) der Abstand der Ränder von benachbarten Grundplattensegmenten (24, 26) und/oder Absorberplattensegmenten (44, 46) sich in radialer Richtung ändert, insbesondere mit zunehmendem Radius zunimmt.

6. Schallabsorberglied nach Anspruch 5, wobei in dem weiteren Abschnitt (72b, 74b) die Ränder von benachbarten Grundplattensegmenten (24, 26) und/oder Absorberplattensegmenten (44, 46) in etwa im Querschnitt v-förmig verlaufen.

7. Schallabsorberglied nach einem der vorhergehenden Ansprüche, wobei jedem Grundplattensegment (24, 26) genau ein Absorberplattensegment (44, 46) zugeordnet ist.

8. Schallabsorberglied nach Anspruch 7, wobei die Grundplattensegmente (24, 26) der Grundplatte (20) mit Ausnahme eines Befestigungsabschnitts (28) einem dem zugeordneten Absorberplattensegment (44, 46) entsprechenden Querschnitt aufweisen.

9. Schallabsorberglied nach einem der vorhergehenden Ansprüche, wobei zueinander benachbart angeordnete Grundplattensegmente (24, 26) und/oder Absorberplattensegmente (44, 46) einander jeweils nicht überlappen.

10. Schallabsorberglied nach einem der vorhergehenden Ansprüche, wobei die Grundplatte (20) und die Absorberplatte (40) jeweils im Wesentlichen einen Sektor eines Kreisrings beschreiben.

11. Schallabsorberglied nach einem der vorhergehenden Ansprüche, wobei jedem Grundplattensegment (24, 26) wenigstens ein Befestigungsmittel (30) zugeordnet ist und/oder jedem Absorberplattensegment (44, 46) mindestens ein Verbindungsmittel (50) zugeordnet ist.

12. Schallabsorberglied nach einem der vorhergehenden Ansprüche, wobei das Dämpfungsmittel (60) als sich radial eben erstreckende Absorberplatte (62) ausgebildet ist.

13. Schallabsorberglied nach einem der vorhergehenden Ansprüche, wobei sich das Dämpfungsmittel (60) zwischen Grundplatte (20) und Absorberplatte (30) radial zwischenraumfrei erstreckt.

14. Schallabsorberglied nach einem der vorhergehenden Ansprüche, wobei das Dämpfungsmittel (60) an seiner einen Flachseite von der Grundplatte (20) und an seiner anderen Flachseite von der Absorberplatte (30) im Wesentlichen überdeckt ist.

15. Schallabsorber mit einer Mehrzahl an einem Radreifen radial beabstandet angeordneter, insbesondere gleichmäßig beabstandet angeordneter, Schallabsorberglieder (10) nach einem der vorhergehenden Ansprüche.
